Europäisches Patentamt

European Patent Office

Office européen des brevets

(19)

(11) Veröffentlichungsnummer : **0 043 343**
**B1**

(12) **EUROPÄISCHE PATENTSCHRIFT**

(45) Veröffentlichungstag der Patentschrift :
07.11.84

(51) Int. Cl.³ : **A 61 C 13/30**, A 61 C 5/08

(21) Anmeldenummer : 81810247.7

(22) Anmeldetag : 17.06.81

(54) Zahnwurzelkanal-Anker.

(30) Priorität : 26.06.80 CH 4896/80

(43) Veröffentlichungstag der Anmeldung :
06.01.82 Patentblatt 82/01

(45) Bekanntmachung des Hinweises auf die Patenterteilung : 07.11.84 Patentblatt 84/45

(84) Benannte Vertragsstaaten :
DE FR SE

(56) Entgegenhaltungen :
CH-A-  562 605
DE-B- 1 541 209
DE-C-  114 317
DE-C-  845 243
FR-A-  700 397
FR-A-  894 771
US-A- 1 479 508

(73) Patentinhaber : Szegvary, Georg, Dr.
Buchholz-Strasse 39
CH-8053 Zürich (CH)

(72) Erfinder : Szegvary, Georg, Dr.
Buchholz-Strasse 39
CH-8053 Zürich (CH)

(74) Vertreter : Seehof, Michel et al
c/o AMMANN PATENTANWAELTE AG BERN
Schwarztorstrasse 31
CH-3001 Bern (CH)

## Beschreibung

Die vorliegende Erfindung bezieht sich auf einen Zahnwurzelkanalanker mit einem Kopf für den künstlichen Zahnaufbau und einem im Querschnitt kreisrunden und am Zahnwurzelende stumpfun Verankerungsteil, wobei der Verankerungsteil eine 0,1 bis 0,15 mm aus seiner Oberfläche schraubenlinienförmig vorstehende Verankerungsrippe mit einem Steigungswinkel von 70 bis 80 Grad bezüglich der Längsachse des Ankers und mindestens zwei in Längsrichtung angeordnete Schneid- und Zemententlastungsnuten aufweist.

Ein solcher Anker ist in der CH-A-562 605 beschrieben. Dabei ist der Verankerungsteil zylindrisch und weist ein glattwandiges zylindrisches Endteil auf. In dieser Patentschrift wird ausgeführt, dass die vorbekannten konischen Anker nachteilig seien, da die Gefahr besteht, dass beim Eindrehen desselben die Wurzel gesprengt wird. Dies kann für vorbekannte konische Anker mit Schraubengewinde zutreffen, wie sie beispielsweise in der FR-A-894 243 beschrieben sind, jedoch kann die Haftung von zylindrischen Verankerungsteilen und das Wiederherauslösen bei Bedarf noch verbessert werden.

Die DE-C-845 243 beschreibt einen Zahnwurzelstift mit einem konischen Verankerungsteil, jedoch ohne Rippen, so dass die Verankerung nicht sehr gut ist.

Es ist demgegenüber Aufgabe der vorliegenden Erfindung, einen Zahnwurzelkanal-Anker anzugeben, der einerseits eine dauerhafte Befestigung gewährleistet, ohne dass Gefahr besteht, dass der Wurzelkanal gesprengt wird und der andererseits auf Wunsch jederzeit lösbar ist. Ein solcher Anker ist im Anspruch 1 beschrieben.

Die Erfindung wird nun im folgenden anhand einer Zeichnung von Ausführungsbeispielen näher erläutert werden.

Figur 1 zeigt ein erstes Ausführungsbeispiel des erfindungsgemässen Ankers im schematisch gezeichneten Zahn,

Figur 2 zeigt einen Schnitt des Kopfes und

Figur 3 einen Schnitt des Verankerungsteils von Figur 1,

die Figuren 4 und 5 zeigen einen Schnitt eines Kopfes und eines Verankerungsteils eines zweiten Ausführungsbeispiels des Ankers.

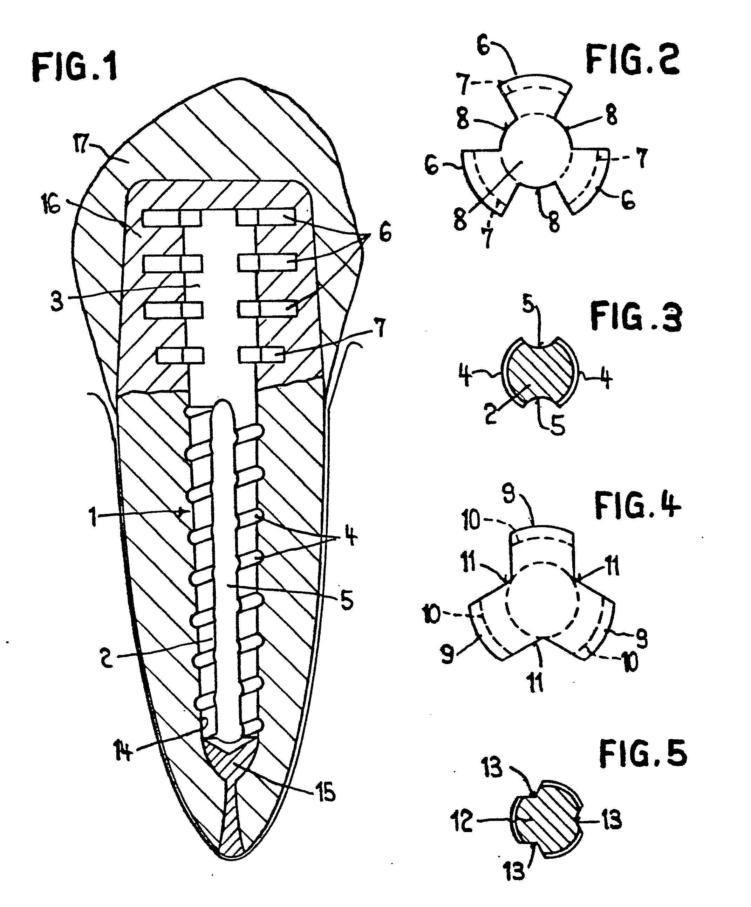

Man erkennt in Fig. 1 den Anker 1 mit dem Verankerungsteil 2 und dem Kopf 3. Der Verankerungsteil 2 ist leicht konisch mit einer Konizität von 2° und ist an seinem Umfang mit einer durchgehenden Verankerungsrippe 4 versehen. Diese Rippe weist eine Steigung von etwa 70° bezüglich der Längsachse auf und ist abgerundet, um eine maximale Verdrängung zu gewährleisten. Der Verankerungsteil 2 weist in seiner Längsrichtung zwei Schneidnuten 5 auf, die gleichzeitig als Zemententlastungsrillen dienen (Fig. 3). Diese Schneidnuten ermöglichen das Einbringen des Ankers ohne grossen Kraftaufwand und verhindern eine Stempelwirkung, wodurch die Gefahr einer Sprengung des Wurzelkanals praktisch beseitigt wird. Die Höhe der Verankerungsrippe beträgt in diesem Fall 0,1 mm. Der Kopf 3 besteht aus vier Flügellagen, wobei die oberen drei Flügellagen 6 einen grösseren Durchmesser aufweisen als die unterste Flügellage 7. Der Kopf ist in der Längsrichtung, wie in Fig. 2 dargestellt, mit drei Nuten 8 versehen.

Wie aus der Draufsicht von Fig. 4 hervorgeht, können die Flügel 9, 10 auch eine andere Gestalt annehmen, d. h. die drei Längsnuten 11 können ein V-förmiges Profil aufweisen. Aus Fig. 5 geht hervor, dass der Verankerungsteil 12 auch drei V-förmige Schneidnuten 13 aufweisen kann.

Die Befestigung des Ankers und des Zahnaufbaus kann am besten anhand von Fig. 1 erläutert werden. Zuerst wurde der Wurzelkanal 14 mittels geeigneter und der Form des Verankerungsteils anpasster Instrumente, unter weitgehender Verwendung von ISO-Instrumenten, vorbereitet und mittels einer bekannten Wurzelfüllmase 14 gegen unten abgeschlossen. Dabei ist darauf zu achten, dass die Form und der Durchmesser des ausgebohrten Wurzelkanals der Form und dem Durchmesser des Verankerungsteils ohne Rippen entspricht. Anschliessend wird eine bestimmte Menge von geeignetem Zement oder Kompositmaterial eingebracht und der Anker eingeführt. Das Befestigen des Verankerungsteils geschieht durch eine Vierteldrehung bis höchstens 1 ganze Drehung, wobei die Befestigungsrippe ein Teil des Zementes verdrängt und wie ein Bajonettverschluss wirkt. Da diese Rippe nach dem Verdrängungsprinzip wirksam ist, was nur in einem bestimmten, kleinen Winkelbereich zu einer dauerhaften Befestigung führt, kann diese Verbindung auch jederzeit gelöst werden, ohne den Wurzelkanal oder die übrige Zahnwurzel zu beschädigen. Anschliessend wird ein übliches Aufbaumaterial 16 um den als Armierung dienenden Kopf 3 angebracht, auf welches eine Zahnkrone 17 befestigt werden kann.

Als Material für den Anker kann eine korrosionsbeständige Legierung verwendet werden. Dabei kann der Verankerungsteil mehr als zwei oder drei Nuten aufweisen, während der Kopf nicht notwendigerweise aus vier Flügellagen, sondern auch weniger oder auch mehr Flügellagen aufweisen kann, während er in seiner Längsrichtung nicht nur drei sondern auch zwei oder vier Nuten aufweisen kann. Die Konizität des Verankerungsteils muss nicht genau 2° betragen, sie kann auch in einem Bereich zwischen 1° und höchstens 5° schwanken, während die Steigung der Rippe 4, bezüglich der Längsachse, zwischen 70 und 80° schwanken kann und die Rippenhöhe bis etwa 0,15 mm betragen kann.

## Ansprüche

1. Zahnwurzelkanalanker mit einem Kopf (3) für den künstlichen Zahnaufbau und einem im Querschnitt kreisrunden und am Zahnwurzelende stumpfen Verankerungsteil (2, 12) wobei der Verankerungsteil (2, 12) eine 0,1 bis 0,15 mm aus seiner Oberfläche schraubenlinienförmig vorstehende Verankerungsrippe (4) mit einem Steigungswinkel von 70 bis 80 Grad bezüglich der Längsachse des Ankers und mindestens zwei in Längsrichtung angeordnete Schneid- und Zemententlastungsnuten (5, 13) aufweist, dadurch gekennzeichnet, dass der Verankerungsteil (2, 12) sich zu seinem Zahnwurzelende hin mit 1 bis 5 Grad konisch verjüngt, dass die Verankerungsrippe (4) auf der gesamten Länge des Verankerungsteils (2, 12) vorgesehen ist und dass die Verankerungsrippe abgerundet ist.

2. Anker nach Anspruch 1, dadurch gekennzeichnet, dass die Konizität des Verankerungsteils (2, 12) 2° beträgt.

3. Anker nach Anspruch 1, dadurch gekennzeichnet, dass der Kopf (3) drei in Längsrichtung angeordnete Nuten (8) und vier Flügellagen (6, 7), wovon die unterste (7) einen kleineren Durchmesser als die oberen hat, aufweist.

4. Anker nach Anspruch 3, dadurch gekennzeichnet, dass die Nuten (11) des Kopfes (9, 10) und diejenigen (13) des Verankerungsteils (12) V-förmig sind.

## Claims

1. Tooth root channel anchor with a head portion (3) upon which an artificial tooth can be built up and an anchoring member (2, 12) having a circular cross section and a blunt tooth root extremity, said anchoring member (2, 12) comprising at its periphery a helical anchoring rib (4) projecting above said periphery of from 0.1 to 0.15 mm and having a helix angle of from 70° to 80° with respect to the longitudinal axis of the anchoring member which further comprises two cutting and cement discharging grooves (5, 13), characterized in that the anchoring member (2, 12) is tapered of from 1° to 5° toward its tooth root extremity, in that the anchoring rib (4) is provided upon the whole length of the anchoring member (2, 12) and in that the anchoring rib is rounded off.

2. Anchor according to claim 1, characterized in that the conicity of the anchoring member (2, 12) is 2°.

3. Anchor according to claim 1, characterized in that the head portion (3) comprises three longitudinally extending grooves (8) and four vanes (6, 7) the lowermost vane (7) having a smaller diameter than the upper vanes.

4. Anchor according to claim 3, characterized in that the grooves (11) of the head portion (9, 10) and the ones (13) of the anchoring member (12) are V-shaped.

## Revendications

1. Cheville d'ancrage s'engageant dans le canal d'une racine dentaire avec une tête (3) pour la confection d'une dent artificielle et une partie d'ancrage (2, 12) avec une section circulaire et une extrémité émoussée vers la racine dentaire, ladite partie d'ancrage (2, 12) comprenant à sa périphérie une nervure d'ancrage hélicoidale (4) dépassant de la périphérie de 0,1 à 0,15 mm et ayant un angle d'hélice de 70° à 80° par rapport à l'axe longitudinal de la partie d'ancrage qui comprend en outre deux gorges de coupe et de décharge de ciment (5, 13), caractérisée en ce que la partie d'ancrage (2, 12) diminue selon un cône de 1° à 5° vers la racine dentaire, en ce que la nervure d'ancrage (4) s'étend sur toute la longueur de la partie d'ancrage (2, 12) et en ce que la nervure d'ancrage est arrondie.

2. Cheville selon la revendication 1, caractérisée en ce que la conicité de la partie d'ancrage (2, 12) est de 2°.

3. Cheville selon la revendication 1, caractérisée en ce que la tête (3) comprend trois gorges (8) s'étendant longitudinalement et quatre ailettes (6, 7), l'ailette la plus basse (7) étant d'un diamètre plus petit que celui des autres ailettes.

4. Cheville selon la revendication 3, caractérisée en ce que les gorges (11), de la tête (9, 10) et celles de la partie d'ancrage (2, 12) sont en forme de V.

FIG.1

FIG.2

FIG.3

FIG.4

FIG.5